# EUROPEAN PATENT SPECIFICATION

(11) **EP 3 690 420 B1**
(45) Date of publication and mention of the grant of the patent: **04.01.2023**
(21) Application number: 19275016.4
(22) Date of filing: 01.02.2019
(51) Int. Cl.: G01M 3/36

(54) **IMPROVED HYDROSTATIC TESTING METHOD**
VERBESSERTES HYDROSTATISCHES PRÜFVERFAHREN
PROCÉDÉ DE TEST HYDROSTATIQUE AMÉLIORÉ

(43) Date of publication of application: 05.08.2020
(73) Proprietor: Kidde Graviner Limited, Shirley, West Midlands B90 4SS (GB)
(72) Inventor: SIMPSON, Terry, NW Wilson, NC 27896 (US); CHATTAWAY, Adam, Ashford, Middlesex TW15 1TZ (GB)
(74) Representative: Dehns

(56) References cited:
- EP-A2- 2 759 823
- DE-A1- 2 837 997
- GB-A- 1 479 685
- US-A- 3 926 036
- US-A- 5 993 682
- US-A- 6 031 011
- US-A1- 2007 023 740

## Description

### TECHNICAL FIELD

The present disclosure relates to methods for structural testing of pressure vessels and the use of new test fluids in such methods.

### BACKGROUND

During the course of manufacture and during their working life, pressure vessels such as fire extinguishers need to be tested to ensure they will not burst or yield at a pressure higher than their normal service pressure. Such testing methods include pneumatic testing and hydrostatic testing. Pneumatic testing can be conducted at the maximum pressure and maximum operating temperature, e.g. for leak-checking seal welds on a weldment assembly. Pneumatic testing is more hazardous than testing hydraulically, due to the compressibility of the fluids used and the stored energy contained.

Hydrostatic pressure testing (often referred to as proof testing) involves filling the vessel to be tested with a test fluid, applying pressure to the filled vessel and examining the vessel walls, joints and seals for leaks or deformation. The level of over pressurization depends on the National or International pressure regulations that the pressure vessel is being tested to, but is frequently 1.5 or 2 times the normal service pressure.

It is common practice to use water as the test fluid in hydrostatic testing in order to minimise the stored energy hazard during the test. After the pressure vessel has been filled with water and pressure tested, the water is then removed by heat or vacuum or both, which can be expensive and time consuming. Furthermore, this can present problems if any water is not completely removed prior to the tested vessel being returned to its intended purpose. For example, residual water may be present in fire extinguishers after pressure testing. When the fire suppression agent is supplied to the extinguisher, this may react with the residual water. For agents such as Halon 1301 (CF₃Br) or Halon 1211 (CF₂BrCl), residual water can hydrolyse the CF₃Br giving rise to acids such as HF and HBr (and HCI in the case of Halon 1211). These acids can, over time, corrode the fire extinguisher, causing leakage. In extreme cases, such corrosion could lead to catastrophic failure of the pressure vessel.

The problem of residual test fluids can be exacerbated in pressure switches and other components having complex internal geometry, e.g. by water entering crevices etc. In the case of vessels intended to contain dry chemical agents such as sodium bicarbonate, these agents may no longer flow properly due to being wet and/or dissolved by the residual water, which can lead to impaired performance of the pressure vessel.

EP 2759823 relates to a method for monitoring the pressure of a gas in a container. DE 2837997 discloses an assembly for testing the gas-tightness of plastic vessels. US 3 926 036 A discloses a hydrostatic pressure vessel test.

US 6031011 discloses bromine-containing halocarbons as foam blowing agents. US 5993682 relates to hydrobromocarbon blends to protect against fires and explosions. US 2007/023740 discloses fluorinated esters in fire extinguishing compositions.

### SUMMARY

The present disclosure provides an alternative to pneumatic testing or proof testing with water by using certain halogenated compounds in pressure testing of pressure vessels. The halogenated compounds are selected from the group consisting of tropodegradable halogenated compounds, fluorinated compounds, halogenated ketones, halogenated alkenes and halogenated ethers.

The claimed invention is defined in independent claim 1.

According to a first aspect, the present disclosure provides a method for hydrostatic internal pressure-testing a pressure vessel, said method comprising using a test liquid which is, or comprises, a halogenated compound selected from the group consisting of tropodegradable halogenated compounds, fluorinated compounds, halogenated ketones, halogenated alkenes and halogenated ethers. The method comprises applying pressure to the vessel containing the test liquid until a desired test pressure is reached.

In aspects of the disclosure, the method described herein may comprise introducing the test fluid to the pressure vessel.

The test liquid is, or comprises, a halogenated compound. The halogenated compound of the present disclosure is a tropodegradable halogenated compound and/or it is a halogenated compound selected from the group consisting of:
(i) fluorinated compounds,
(ii) halogenated ketones,
(iii) halogenated alkenes, and
(iv) halogenated ethers.

The halogenated compound comprises carbon, one or more halogen atoms and, optionally, hydrogen and/or oxygen. Other elements may also be present. The halogenated compound may be saturated or unsaturated. In certain aspects, the halogenated compound is unsaturated, e.g. it may contain a C=C or C=O bond.

In certain aspects of the disclosure, 50 to 100 vol.%, 70 to 100 vol.%, 85 to 100 vol.%, 95 to 100 vol.%, 98 to 100 vol.%, or 99 to 100 vol.% of the test liquid is a halogenated compound as herein described or a mixture of halogenated compounds as herein described. Additional optional components of the test liquid include coloured dyes (e.g. red or fluorescent) which may be added to the test liquid to make leaks easier to detect. Such materials are typically used in relatively small amounts, e.g. amounting to 0.1 to 5, e.g. 0.5 to 3, e.g. 1 to 3 vol.% of the test liquid.

In some aspects of the present disclosure, the test liquid consists of, or consists essentially of, a halogenated compound as herein described or a mixture of halogenated compounds as herein described.

The halogenated compound as herein described may be a chlorofluoro compound.

According to one aspect of the present disclosure, the halogenated compound is a fluorinated compound, i.e. a compound comprising fluorine, although other halogens, such as chlorine, may also be present. Examples of fluorinated compounds include refrigerants, solvents and foam blowing agents.

The term "fluorinated" should be understood to require the presence of fluorine but does not necessarily exclude the presence of other halogens. For example, unless otherwise specified, fluorinated compounds as described herein may contain both fluorine and chlorine.

The halogenated compound of the present disclosure may be a fluorinated compound selected from the group consisting of fluorinated ketones, fluorinated ethers (i.e. (hydro)fluoroethers/HFEs), fluorinated alkanes, fluorinated alkenes (e.g. (hydro)fluoro olefins/HFOs or (hydro)chlorofluoro olefins/HCFOs), fluorinated aromatic compounds and perfluorinated compounds. The term "(hydro)" is intended to denote that hydrogen atoms are optional.

In the partially fluorinated compounds described herein, provided at least one fluorine is present, the halogens may be independently selected from F, CI, Br and I, e.g. independently selected from F and CI. The fluorinated compounds described herein may be (chloro)fluoro compounds, where the term "(chloro)" is intended to denote that chlorine atoms are optional.

Examples of fluorinated ketones include compounds of formula R¹C(=O)R², where:
R¹ is C₍ₙ₎H₍₂ₙ₊₁₋ₓ₎Hal₍ₓ₎,
R² is selected from C₍ₙ₎H₍₂ₙ₊₁₎ and C₍ₙ₎H₍₂ₙ₊₁₋ₓ₎Hal₍ₓ₎,
   each n is independently selected from integers greater than or equal to 1, each x is independently selected from integers greater than or equal to 1, each Hal is a halogen atom, independently selected from F, CI, Br and I, with the proviso that at least one Hal is F.
R¹ and R² may both be C₍ₙ₎H₍₂ₙ₊₁₋ₓ₎Hal₍ₓ₎.

Each n may be independently selected from 1 to 10, e.g. 1 to 6, or 2 to 4, e.g. 2 or 3.

Each x may be 2n+1, e.g. the fluorinated ketone contains no hydrogen atoms.

Each Hal may be independently selected from F and Cl, e.g. Hal may be F.

Examples of fluorinated ethers include compounds of formula R¹-O-R²,
R¹ is C₍ₙ₎H₍₂ₙ₊₁₋ₓ₎Hal₍ₓ₎,
R² is selected from C₍ₙ₎H₍₂ₙ₊₁₎ and C₍ₙ₎H₍₂ₙ₊₁₋ₓ₎Hal₍ₓ₎,
   each n is independently selected from integers greater than or equal to 1, each x is independently selected from integers greater than or equal to 1, each Hal is a halogen atom, independently selected from F, Cl, Br and I, with the proviso that at least one Hal is F.
R¹ and R² may both be C₍ₙ₎H₍₂ₙ₊₁₋ₓ₎Hal₍ₓ₎.
R² may be -CH₃ or -C₂H₅.

Each n may be independently selected from 1 to 10, e.g. 1 to 7, 2 to 7, 1 to 6, 2 to 6, or 2 to 4, e.g. 2 or 3.

Each x may be 2n+1, e.g. the fluorinated ether contains no hydrogen atoms.

Each Hal may be independently selected from F and Cl, e.g. Hal may be F.

Examples of fluorinated ethers (e.g. (hydro)fluoro ethers/HFEs) include:
heptafluoromethoxypropane (C₃F₇OCH₃),
nonafluoromethoxybutane (C₄F₉OCH₃),
nonafluoroethoxybutane (C₄F₉OC₂H₅),
1,1,1,2,2,3,4,5,5,5-decafluoro-3-methoxy-4-(trifluoromethyl)pentane ((C₂F₅CF(OCH₃)CF(CF₃)₂) and 2-trifluoromethyl-3-ethoxydodecofluorohexane ((C₃F₇CF(OC₂H₅)CF(CF₃)₂).

Examples of chlorinated fluorinated ethers include CF₃CHClOCHF₂ and CHClFCF₂OCHF_{2.}

The fluorinated compound may be a fluorinated alkene. Examples of fluorinated alkenes include perfluorinated alkenes and partially fluorinated alkenes (including chlorofluoro alkenes), e.g. (hydro)fluoro olefins/HFOs or (hydro)chlorofluoro olefins/HCFOs. Those that are partially fluorinated may contain hydrogens and/or other halogens. The halogens may be independently selected from F, Cl, Br and I, e.g. independently selected from F and Cl.

The fluorinated alkene may be a perfluorinated or partially fluorinated propene, butene or pentene, e.g. a perfluorinated or partially fluorinated propene or butene. Provided at least one fluorine is present, the halogens in a fluorinated alkene may be independently selected from F, Cl, Br and I, e.g. independently selected from F and Cl. The fluorinated alkene compound may be a chlorofluoro alkene.

Examples of (hydro)fluoro olefins/HFOs include partially fluorinated alkenes such as CF₃CH=CHF, CF₃CF=CH₂ and CF₃CH=CHCF_{3.} Examples of (hydro)chlorofluoro olefins/HCFOs include CF₃CH=CHCl, CF₃CCl=CH₂ and CF₃-CF=CHCl.

Examples of fluorinated alkanes include (hydro)fluoroalkanes and (hydro)chlorofluoroalkanes.

Examples of fluorinated aromatic compounds include those containing C=C, C=O or C-O bonds.

Examples of perfluorinated compounds include perfluorinated alkenes and ketones.

In certain aspects of the present disclosure, the halogenated compound is a fluorinated compound selected from the group consisting of fluorinated ketones, fluorinated ethers (e.g. HFEs) and fluorinated alkenes (e.g. (hydro)fluoro olefins/HFCOs) or (hydro)fluorochloro olefins/HFCOs), e.g. selected from the group consisting of (chloro)fluoroketones, (chloro)fluoroethers and (chloro)fluoroalkenes.

In certain aspects, the halogenated compound is a halogenated ketone. Examples of halogenated ketones are aromatic ketones, fluorinated ketones (including (hydro)chlorofluoroketones) and perhaloketones, e.g. perfluoroketones.

The halogenated ketone may be a chlorofluoro ketone.

Examples of halogenated ketones include compounds of formula R¹C(=O)R², where:
R¹ is C₍ₙ₎H₍₂ₙ₊₁₋ₓ₎Hal₍ₓ₎,
R² is selected from C₍ₙ₎H₍₂ₙ₊₁₎ and C₍ₙ₎H₍₂ₙ₊₁₋ₓ₎Hal₍ₓ₎,
   each n is independently selected from integers greater than or equal to 1, each x is independently selected from integers greater than or equal to 1, each Hal is a halogen atom, independently selected from F, Cl, Br and I.
R¹ and R² may both be C₍ₙ₎H₍₂ₙ₊₁₋ₓ₎Hal₍ₓ₎.

Each n may be independently selected from 1 to 10, e.g. 1 to 6, or 2 to 4, e.g. 2 or 3.

Each x may be 2n+1, e.g. the halogenated ketone contains no hydrogen atoms.

Each Hal may be independently selected from F and Cl, e.g. Hal may be F.

Examples of halogenated ketones include the fluorinated ketones discussed herein.

The halogenated compound may be a halogenated alkene. Examples of halogenated alkenes are those containing aromatic groups, partially halogenated alkenes, perhalogenated alkenes and fully- and partially-fluorinated alkenes (including chlorofluoro alkenes). The halogens may be independently selected from F, Cl, Br and I, e.g. independently selected from F and Cl.

The halogenated alkene may be a perhalogenated or partially halogenated propene, butene or pentene, e.g. a perhalogenated or partially halogenated propene or butene. The halogens may be independently selected from F, Cl, Br and I, e.g. independently selected from F and Cl. The halogenated alkene compound may be a chlorofluoro alkene.

The fluorinated alkene may be a perfluorinated or partially fluorinated propene, butene or pentene, e.g. a perfluorinated or partially fluorinated propene or butene. Provided at least one fluorine is present, the halogens in a fluorinated alkene may be independently selected from F, Cl, Br and I, e.g. independently selected from F and Cl. The fluorinated alkene compound may be a chlorofluoro alkene.

Examples of fluorinated alkenes include (hydro)fluoro olefins/HFOs and (hydro)chlorofluoro olefins/HCFOs. Those that are partially fluorinated may contain hydrogens and/or other halogens. Examples of (hydro)fluoro olefins/HFOs include partially fluorinated alkenes such as CF₃CH=CHF, CF₃CF=CH₂ and CF₃CH=CHCF₃. Examples of (hydro)chlorofluoro olefins/HCFOs include CF₃CH=CHCl, CF₃CCl=CH₂ and CF3-CF=CHCI.

The halogenated compound may be a halogenated ether, e.g. a fluorinated ether (such as a chlorofluoro ether), a perhalogenated ether or an ether containing one or more aromatic groups.

Examples of halogenated ethers include compounds of formula R¹-O-R²,
where:
R¹ is C₍ₙ₎H₍₂ₙ₊₁₋ₓ₎Hal₍ₓ₎,
R² is selected from C₍ₙ₎H₍₂ₙ₊₁₎ and C₍ₙ₎H₍₂ₙ₊₁₋ₓ₎Hal₍ₓ₎,
   each n is independently selected from integers greater than or equal to 1, each x is independently selected from integers greater than or equal to 1, each Hal is a halogen atom, independently selected from F, Cl, Br and I.
R¹ and R² may both be C₍ₙ₎H₍₂ₙ₊₁₋ₓ₎Hal₍ₓ₎.
R² may be -CH₃ or -C₂H₅.

Each n may be independently selected from 1 to 10, e.g. 1 to 7, 2 to 7, 1 to 6, 2 to 6, or 2 to 4, e.g. 2 or 3.

Each x may be 2n+1, e.g. the halogenated ether contains no hydrogen atoms.

Each Hal may be independently selected from F and Cl, e.g. Hal may be F.

Examples of halogenated ethers are fluorinated ethers (including (hydro)chlorofluoro ethers) as discussed above.

In some aspects of this disclosure, the halogenated compound may be a halogenated aromatic compound, e.g. one containing a ketone (C=O), alkene (C=C) or ether (C-O) linkage. Examples of such halogenated aromatic compounds are tropodegradable halogenated aromatic compounds, fluorinated aromatics, (hydro)chlorofluoro aromatics and perhalogenated aromatics.

In some aspects of this disclosure, the halogenated compound may be a perhalogenated compound, e.g. a perfluorinated compound, a perhalogenated alkene, a perhalogenated ketone or a perhalogenated aromatic. In certain aspects, the perhalogenated compound is tropodegradable.

The halogenated compound according to the present disclosure is ideally environmentally friendly, e.g. tropodegradable, so it has a very short atmospheric lifetime and does not reach the stratosphere.

In certain aspects, the halogenated compound is tropodegradable, e.g. it degrades in the troposphere such that it does not enter the stratosphere.

The halogenated compound may have an atmospheric lifetime of 10 years or less, e.g. 8 years or less, 6 years or less, 4 years or less or 2 years or less.

The halogenated compound may have an ozone depletion potential of less than 1, e.g. 0 to 0.5, e.g. less than 0.2, e.g. 0.

The halogenated compound may have a low global warming potential (GWP), e.g. 750 or lower, 500 or lower, or 150 or lower (relative to CO₂). GWP is expressed in terms of the 100 year integrated time horizon (ITH).

The test fluid (e.g. the halogenated compound as herein described) is liquid at room temperature, yet may be volatile enough to evaporate to facilitate removal of the residue once the pressure testing is complete.

The halogenated compound as herein described may have a boiling point in the range of 30 to 200 °C, 40 to 150 °C or 40 to 100 °C, e.g. 45 to 75 or 60 to 150 °C. Boiling points referred to herein are at atmospheric pressure (101.325 kPa) unless otherwise stated.

In certain aspects of the present disclosure, the halogenated compound does not contain bromine. In certain aspects, the halogenated compound does not contain chlorine. In certain aspects, the halogenated compound does not contain iodine.

The halogenated compound may be fluorinated. In certain aspects, the only halogen atoms in the halogenated compound are fluorine atoms and/or chlorine atoms. In certain aspects, the only halogen atoms in the halogenated compound are fluorine atoms.

The halogenated compound may be a perhalogenated compound. In certain aspects, the halogenated compound is only partially halogenated, e.g. less than 100%, e.g. 10 to 90%, 20 to 70% or 30 to 50% of the hydrogen atoms of the parent compound have been replaced with halogen atoms.

The halogenated compound may contain greater than 50 wt.% halogen (in relation to the total weight of halogens as a percentage of the weight of compound as a whole), e.g. 60 to 80 wt.%, 65 to 75 wt.% or greater than 70% wt.% halogen.

In some aspects, halogenated ketones, alkenes, ethers and aromatic compounds may require higher amounts of halogen than saturated halogenated compounds. For example, these may contain greater than 65 wt.% halogen (in relation to the total weight of halogens as a percentage of the weight of compound as a whole), e.g. 70 to 80 wt.%, 65 to 75 wt.% or greater than 70% wt.% halogen.

In certain aspects, the halogenated compound or the test liquid is, or comprises, one or more of the following fluorinated ketones:
CF₃CF₂C(=O)CF(CF₃)₂,
(CF₃)₂CFC(=O)CF(CF₃)₂,
CF₃(CF₂)₂C(=O)CF(CF₃)₂,
CF₃(CF₂)₃C(=O)CF(CF₃)₂,
CF₃(CF₂)₅C(=O)CF₃,
CF₃CF₂C(=O)CF₂CF₂CF₃,
CF₃C(=O)CF(CF₃)₂, and
perfluorocyclohexanone.

In certain aspects, the halogenated compound or the test liquid is, or comprises one or more of the following fluorinated ketones:
CF₃CF₂C(=O)CF(CF₃)₂,
(CF₃)₂CFC(=O)CF(CF₃)₂, and
CF₃(CF₂)₂C(=O)CF(CF₃)₂.

In certain aspects, the test liquid is or comprises a halogenated ketone or a mixture of halogenated ketones as herein described. In some aspects, 50 to 100 vol.%, 70 to 100 vol.%, 85 to 100 vol.%, 95 to 100 vol.%, 98 to 100 vol.%, or 99 to 100 vol.% of the test liquid is a halogenated ketone or a mixture of halogenated ketones. In certain aspects, the test liquid consists essentially of a halogenated ketone or a mixture of halogenated ketones.

By halogenated ketone is meant a ketone comprising at least one halogen atom (e.g. F, Cl, Br, I), with hydrogen atoms being optional. In some aspects, the test liquid comprises, or consists essentially of, a perhalogenated ketone or a mixture of perhalogenated ketones. The halogenated ketones described herein may be fluorinated ketones, for example perfluorinated ketones.

Conveniently, the halogenated compound may be miscible with, and/or inert towards, the material which the pressure vessel contains during its standard operation. For example, the halogenated compound may be miscible with, and/or inert towards, fire extinguishing agents such as Halon 1301 (CF₃Br). The miscibility/inertness means that any residual compound remaining after pressure testing does not adversely affect the operation of the pressure vessel.

Test liquids of the present disclosure combine the "clean" attributes of pneumatic testing and the relative safety of hydrostatic testing. Compared with hydrostatic testing with water, using these liquids saves time and money by allowing lower temperature ovens to remove residual agent. Depending on the temperature of the ovens used to remove water presently this may also give a benefit in terms of health and safety. Also, the test liquid may be selected to be compatible with the material intended to be used in the pressure vessel, such that if any of the test liquid does remain in the vessel, it does not cause problems such as the corrosion found in fire extinguishers when residual water reacts with Halon. This compatibility means that removal of the test liquid can be less stringent, leading to added convenience.

Examples of suitable compounds are fluorinated ketones, such as those known as FK-5-1-12 (C₆F₁₂O) and FK-6-1-14 (C₇F₁₄O). These types of materials have low toxicity and low environmental impact (e.g. zero ozone depletion potential (ODP) and a global warming potential (GWP) of <1). In contrast to water, they will not cause hydrolysis of Halon 1301. They are more volatile, have a lower latent heat of vaporization and a lower surface tension than water, making it much easier to remove the test liquid from the pressure vessel after testing.

The method of the present disclosure is one for pressure testing pressure vessels, e.g. for hydrostatically testing the internal pressure strength of a vessel. The test liquids of the present disclosure may be applied to known pressure testing techniques for a variety of pressure vessels.

In aspects of the disclosure, the method described herein comprises:
(a) introducing the test liquid (or halogenated compound) as described herein to a pressure vessel;
(b) applying pressure to the vessel containing the test liquid (or halogenated compound) until a desired test pressure is reached;
(c) checking the structure of the pressure vessel, e.g. by checking for leaks and/or by measuring the volumetric distortion of the vessel at the test pressure, and, optionally;
(d) recovering the test liquid or halogenated compound.

Pressure vessels include any vessel required to contain material under pressure or to be used under pressure. Examples are fluid containment vessels (e.g. storage tanks, fuel tanks, gas cylinders, boilers, pipelines and heat exchangers), inflation systems (e.g. emergency helium inflation systems for aircraft), fire extinguishers, or other fire suppression devices. Examples of fire extinguishers and fire suppression devices are aviation fire extinguishers, industrial fire suppression devices (e.g. suitable for computer rooms or data storage centres) and military fire suppression devices (e.g. suitable for use in vehicles, e.g. in the engine compartment or the crew compartment).

The test liquids of the present disclosure may be conveniently be applied to pressure testing of any pressure vessels, for example fire extinguishers, e.g. those containing vaporising liquid agents, such as Halon and Halon replacements.

Typically, the pressure testing method is carried out on an empty vessel. If the pressure test is being carried out as part of the manufacturing process, then the pressure vessel is likely to be empty. However, for periodic safety checks, e.g. those required to be carried out on vessels such as fire extinguishers, the material usually contained in the vessel should normally be removed prior to the pressure test taking place. If necessary, the vessel may therefore be emptied of its usual contents prior to the pressure test taking place.

The test liquid according to the present disclosure is introduced into the pressure vessel prior to the pressure vessel being pressurized. Typical means for supplying the pressure vessel with test liquid include pumping, flowing and/or injecting the liquid into the vessel.

In certain aspects, the test liquid is introduced such that it fills 80-100 vol.%, e.g. 85-100, 90-100, 95-100, 98-100, 99.5-100 vol.% of the internal volume of the pressure vessel. The internal volume is the containment volume (i.e. the volume which stores material during the usual operation of the vessel), typically defined by internal walls of the vessel and is dependent on the type of vessel and its intended use. Increased safety benefits are realized when the pressure vessel is completely filled with test liquid. In certain aspects, the pressure vessel is filled, or substantially filled, with test liquid prior to pressurizing the vessel.

Pressure tests involve pressurizing the pressure vessel subsequent to the test liquid being introduced. The level of over pressurization depends on the National or International pressure regulations that the pressure vessel is being tested to, but is frequently 1.5 or 2 times the normal service (operating) pressure.

Examples of pressure vessels and their service pressures are set out in the following table:

| Type of Pressure Vessel | Operating Pressure (MPa) | Agents contained by vessel during normal use |
|---|---|---|
| Industrial fire Suppression (e.g. computer rooms, data centres) | 2.5-4.2 | Halons / Halon Replacements |
| Military Vehicle fire & explosion suppression | 5.2-6.0 | Halons / Halon Replacements |
| Aviation fire suppression | 4.2-10 | Halons / Halon Replacements |
| Inflation, e.g. He spheres for emergency inflation systems | 25-35 | Inert gases |
| Aviation fire suppression | 30-70 | Inert Gases |

The test pressure applied to the pressure vessel during the method of the present disclosure is typically 100-1000%, e.g. 100-500%, e.g. 125-200 or 150-200% of the operating pressure of the pressure vessel. Typical test pressures for fire extinguishers are therefore 3.5-8.5 MPa.

Suitable pressurizing gases include nitrogen, argon and air. Pressurizing the vessel may be carried out by any standard means, e.g. by applying pressure with nitrogen or argon or by applying pressure using air, for example with a hydraulic pump. The vessel pressure may be monitored, e.g. with a pressure gauge or transducer.

The smaller the headspace in the vessel after the test liquid has been added, the lower the amount of pressure needs to be applied to reach the desired test pressure. Supplying as much test liquid as possible to the vessel therefore improves safety by lowering the amount of stored energy present in the vessel (stored energy is the pressure multiplied by the volume of the headspace)

Pressure is applied until the test pressure is reached, e.g. an equilibrium test pressure is reached. In situations where the pressurizing gas is one that is soluble in the test liquid (e.g. nitrogen is soluble in halogenated compounds such as fluorinated ketones) this solubility may need to be taken into account when pressurizing the vessel. For example, pressurizing with a gas that is soluble in the test liquid is likely to take longer than pressurizing with a gas that is not soluble in the test liquid. Having reached a certain pressure, the pressure may then fall if the gas (e.g. nitrogen) is forced into solution. In this case, it may be necessary to "top up" the pressure one or more times to ensure equilibrium (e.g. a constant test pressure) is reached. Monitoring the pressure during the pressurization step can assist in identifying if further pressurization is required.

Pressure tightness can be tested by shutting off the supply valve and observing whether there is a pressure loss. The test pressure is typically held for a time (e.g. 1 to 10 minutes) before or during which any necessary checks are carried out. For example, known weak points such as "weldments", e.g. as ports for filling, pressure measuring and discharging may be examined for attachment and leaks.

Coloured dyes (e.g. red or fluorescent) may be added to the test liquid (e.g. prior to the test liquid entering the pressure vessel) to make leaks easier to see. Such materials are typically used in relatively small amounts, e.g. amounting to 0.1 to 5, e.g. 0.5 to 3, e.g. 1 to 3 vol.% of the test liquid. Distortion of the vessel may also be measured, e.g. by measuring the volumetric expansion. The degree of volumetric expansion that may be tolerated will typically be set by safety standards.

After the necessary checks have been made, the pressure applied is released. As the volume of pressurizing gas used is very small, venting can typically be accomplished over a period of 2 to 20 s, e.g. 5-10 s. Typical venting rates are 0.5 - 20, e.g. 1-10 MPa/s.

When the pressurizing gas is one that is soluble in the test liquid, it may be necessary to release the pressure more slowly in order to avoid excess frothing as the pressuring gas comes out of solution. In some cases, agitating the vessel may assist.

The test liquid may be recovered (e.g. to be reused or recycled) from the pressure vessel, e.g. by pumping, applying vacuum to said pressure vessel and/or heating the vessel. Further pumping, vacuum and/or heating may be used to remove residual test liquid.

An embodiment of the disclosure will now be described, by way of example only.

The pressure vessel to be tested may be checked prior to the test, e.g. to ensure that all ports, other than that through which the test liquid is to be introduced, are closed, for example by welding shut.

Test liquid as herein described, e.g. CF₃CF₂C(=O)CF(CF₃)₂, is introduced to the vessel through any convenient inlet, such as a pressure switch port. Ensuring that the vessel is as full as conveniently possible (i.e. that the test liquid takes up as much of the internal volume as possible) increases safety by minimizing the amount of stored energy within the vessel.

Pressure is then applied to the vessel, for example by introducing nitrogen. To maximize operator safety, the test, particularly the pressurization stage, can be carried out in a safety enclosure which as a hydro test booth. The pressure in the vessel may be monitored via a pressure gauge or a transducer.

The pressure is held at test pressure, e.g. two times the normal service pressure of the vessel, while the necessary checks are carried out. Volumetric expansion may be measured and vessel walls, joints or seals may be checked for leaks. When the required checks have been finished, the vessel is vented to release the pressure. The test liquid is removed, e.g. by pumping, and may be stored for future use. Additional vacuum may be applied in order to remove the last traces of test liquid.

Test liquids which are more volatile than water require less time and energy to remove, e.g. allowing lower temperature ovens to remove residual liquid. Using test liquids which are compatible with the material intended to be used in the pressure vessel means that removal of the test liquid can be less stringent, leading to added convenience. For example, using a test liquid that is inert towards Halon 1301 to test a Halon 1301 fire extinguisher means that any residual test liquid does not cause any problems for future use of the fire extinguisher.

The above description is of an exemplary embodiment of the disclosure only. It will be readily appreciated by the skilled person that the various optional and exemplary features of the disclosure as described above may be applicable to all the various aspects of the disclosure discussed herein.

The disclosure will now be further described by way of the following non-limiting example.

### Example 1

### Fluoroketone Hydro Test

1. Select the pressure vessel to be tested. Ensure burst discs are installed. Pressure switch/TCPT should be removed. Fill plug and gasket should be removed. All other ports should be welded closed.
2. Seal pressure switch port.
3. Fill container completely with CF₃CF₂C(=O)CF(CF₃)₂ through the pressure switch port.
4. Install pressure switch port plug with pressure transducer attached.
5. Install fill port adapter to allow pressurization with nitrogen.
6. Place the vessel in a fixture located inside hydro test booth.
7. Set up the pressure transducer to monitor cylinder pressure.
8. Increase cylinder pressure to 6.2 MPa test pressure (e.g. for a fire extinguisher) by applying nitrogen pressure and hold for 1 minute.
9. Record volumetric expansion.
10. Record the maximum pressure obtained within the cylinder via the pressure transducer.
11. Vent pressure slowly from the test vessel.
12. Recycle/recover liquid CF₃CF₂C(=O)CF(CF₃)₂ via Haskell pump.
13. Connect a vacuum pump to the fill valve and pull a vacuum of at least 20" mercury (-10 psi, 67728 Pa) on the cylinder. Hold this vacuum for 5 minutes.
14. Remove the vacuum pump and pressure switch plug.

It will be understood that the description above relates to a non-limiting example and that various changes and modifications may be made from the arrangement shown without departing from the scope of this disclosure, which is set forth in the accompanying claims.

It will be understood from the above that the disclosure in its embodiments may provide the advantage of allowing pressure testing of pressure vessels without the safety hazards of pneumatic testing and without contamination issues which can be experienced from existing hydrostatic testing methods.

## Claims

1. A method for hydrostatic internal pressure-testing a pressure vessel, **characterised in that** said method comprises applying pressure to the vessel containing a test liquid until a desired test pressure is reached, wherein the test liquid comprises a halogenated compound selected from the group consisting of tropodegradable halogenated compounds, fluorinated compounds, halogenated ketones, halogenated alkenes and halogenated ethers.

2. The method of claim 1, wherein the test liquid consists of one or more of said halogenated compounds.

3. The method of claim 1 or claim 2 wherein the halogenated compound has a boiling point in the range of 30 to 200 °C.

4. The method of any preceding claim wherein the halogenated compound is selected from the group consisting of fluorinated ketones, fluorinated ethers, and fluorinated alkenes

5. The method of claim 4 wherein the halogenated compound is selected from the group consisting of (chloro)fluoroketones, (chloro)fluoroethers and (chloro)fluoroalkenes.

6. The method of any preceding claim, wherein the halogenated compound is a compound of formula R¹C(=O)R² or R¹-O-R², where:
R¹ is C₍ₙ₎H₍₂ₙ₊₁₋ₓ₎Hal₍ₓ₎,
R² is selected from C₍ₙ₎H₍₂ₙ₊₁₎ and C₍ₙ₎H₍₂ₙ₊₁₋ₓ₎Hal₍ₓ₎,
each n is independently selected from integers greater than or equal to 1, each x is independently selected from integers greater than or equal to 1, each Hal is a halogen atom, independently selected from F, Cl, Br and I.

7. The method of claim 6 wherein where each Hal is F.

8. The method of any preceding claim, wherein where the test liquid is or comprises:
CF₃CF₂C(=O)CF(CF₃)₂,
(CF₃)₂CFC(=O)CF(CF₃)₂,
CF₃CF₂CF₂C(=O)CF(CF₃)₂,
or a mixture of two or more thereof.

9. The method of any preceding claim wherein said pressure vessel is a fire extinguisher.

10. The method of any preceding claim wherein said method comprises measuring the volumetric distortion of the vessel at the test pressure.

11. The method of any preceding claim wherein said method comprises recovering the test liquid.

## Patentansprüche

1. Verfahren zur hydrostatischen Innendruckprüfung eines Druckbehälters, **dadurch gekennzeichnet, dass** das Verfahren das Anwenden von Druck auf den Behälter, der eine Prüfflüssigkeit enthält, umfasst, bis ein gewünschter Prüfdruck erreicht ist, wobei die Prüfflüssigkeit eine halogenierte Verbindung umfasst, die aus der Gruppe ausgewählt ist, die aus tropoabbaubaren halogenierten Verbindungen, fluorierten Verbindungen, halogenierten Ketonen, halogenierten Alkenen und halogenierten Ethern besteht.

2. Verfahren nach Anspruch 1, wobei die Prüfflüssigkeit aus einer oder mehreren der halogenierten Verbindungen besteht.

3. Verfahren nach Anspruch 1 oder Anspruch 2, wobei die halogenierte Verbindung einen Siedepunkt im Bereich von 30 bis 200 °C aufweist.

4. Verfahren nach einem der vorhergehenden Ansprüche, wobei die halogenierte Verbindung aus der Gruppe ausgewählt ist, die aus fluorierten Ketonen, fluorierten Ethern und fluorierten Alkenen besteht.

5. Verfahren nach Anspruch 4, wobei die halogenierte Verbindung aus der Gruppe ausgewählt ist, die aus (Chlor-)Fluorketonen, (Chlor-)Fluorethern und (Chlor-)Fluoralkenen besteht.

6. Verfahren nach einem der vorhergehenden Ansprüche, wobei die halogenierte Verbindung eine Verbindung der Formel R¹C(=O)R² oder R¹-O-R² ist, wobei:
R¹ C₍ₙ₎H₍₂ₙ₊₁₋ₓ₎Hal₍ₓ₎ ist,
R² ausgewählt ist aus C₍ₙ₎H₍₂ₙ₊₁₎ und C₍ₙ₎H(₂ₙ₊₁₋ₓ₎Hal₍ₓ₎,
jedes n unabhängig ausgewählt ist aus Ganzzahlen größer oder gleich 1,
jedes x unabhängig ausgewählt ist aus Ganzzahlen größer oder gleich 1,
jedes Hal ein Halogenatom ist, das unabhängig ausgewählt ist aus F, Cl, Br und I.

7. Verfahren nach Anspruch 6, wobei jedes Hal F ist.

8. Verfahren nach einem der vorhergehenden Ansprüche, wobei die Prüfflüssigkeit ist oder umfasst:
CF₃CF₂C(=O)CF(CF₃)₂,
(CF₃)₂CFC(=O)CF(CF₃)₂,
CF₃CF₂CF₂C(=O)CF(CF₃)₂,
oder eine Mischung aus zwei oder mehreren davon.

9. Verfahren nach einem der vorhergehenden Ansprüche, wobei der Druckbehälter ein Feuerlöscher ist.

10. Verfahren nach einem der vorhergehenden Ansprüche, wobei das Verfahren das Messen der volumetrischen Verformung des Behälters bei dem Prüfdruck umfasst.

11. Verfahren nach einem der vorhergehenden Ansprüche, wobei das Verfahren das Rückgewinnen der Prüfflüssigkeit umfasst.

## Revendications

1. Procédé pour tester la pression interne hydrostatique d'un récipient sous pression, **caractérisé en ce que** ledit procédé comprend l'application d'une pression au récipient contenant un liquide de test jusqu'à ce qu'une pression de test souhaitée soit atteinte, dans lequel le liquide de test comprend un composé halogéné choisi dans le groupe constitué de composés halogénés tropodégradables, de composés fluorés, de cétones halogénées, d'alcènes halogénés et d'éthers halogénés.

2. Procédé selon la revendication 1, dans lequel le liquide de test est constitué d'un ou de plusieurs desdits composés halogénés.

3. Procédé selon la revendication 1 ou la revendication 2, dans lequel le composé halogéné a un point d'ébullition dans la plage de 30 à 200 °C.

4. Procédé selon une quelconque revendication précédente, dans lequel le composé halogéné est choisi dans le groupe constitué de cétones fluorées, d'éthers fluorés et d'alcènes fluorés.

5. Procédé selon la revendication 4, dans lequel le composé halogéné est choisi dans le groupe constitué de (chloro)fluorocétones, de (chloro)fluoroéthers et de (chloro)fluoroalcènes.

6. Procédé selon une quelconque revendication précédente, dans lequel le composé halogéné est un composé de formule R¹C(=O)R² ou R¹-O-R², où :
R¹ est C₍ₙ₎H₍₂ₙ₊₁₋ₓ₎Hal₍ₓ₎,
R² est choisi parmi C₍ₙ₎H₍₂ₙ₊₁₎ et C₍ₙ₎H₍₂ₙ₊₁₋ₓ₎Hal₍ₓ₎,
chaque n est choisi indépendamment parmi des nombres entiers supérieurs ou égaux à 1,
chaque x est choisi indépendamment parmi des nombres entiers supérieurs ou égaux à 1,
chaque Hal est un atome d'halogène, choisi indépendamment parmi F, CI, Br et I.

7. Procédé selon la revendication 6, dans lequel chaque Hal est F.

8. Procédé selon une quelconque revendication précédente, dans lequel le liquide de test est ou comprend :
CF₃CF₂C(=O)CF(CF₃)₂,
(CF₃)₂CFC(=O)CF(CF₃)₂,
CF₃CF₂CF₂C(=O)CF(CF₃)₂,
ou un mélange de deux de ceux-ci ou plus.

9. Procédé selon une quelconque revendication précédente, dans lequel ledit récipient sous pression est un extincteur.

10. Procédé selon une quelconque revendication précédente, dans lequel ledit procédé comprend la mesure de la distorsion volumétrique du récipient à la pression de test.

11. Procédé selon une quelconque revendication précédente, dans lequel ledit procédé comprend la récupération du liquide de test.
